# EUROPEAN PATENT SPECIFICATION

(11) **EP 1 829 772 B1**
(45) Date of publication and mention of the grant of the patent: **29.07.2009**
(21) Application number: 07103187.6
(22) Date of filing: 28.02.2007
(51) Int. Cl.: B62D 25/20, B62D 31/00, B60N 2/01

(54) **Vehicle Body Structure**
Fahrzeugaufbaukonstruktion
Carrosserie de véhicule

(30) Priority: 03.03.2006 JP 2006057587; 15.03.2006 JP 2006070498; 15.03.2006 JP 2006070499
(43) Date of publication of application: 05.09.2007
(73) Proprietor: Mazda Motor Corporation, Aki-gun, Hiroshima 730-8670 (JP)
(72) Inventor: Ikenoya, Kazutoshi c/o Mazda Motor Corporation, 730-8670 Hiroshima (JP); Ohno, Akifumi c/o Mazda Motor Corporation, 730-8670 Hiroshima (JP); Maruko, Takao c/o Mazda Motor Corporation, 730-8670 Hiroshima (JP)
(74) Representative: Thoma, Michael

(56) References cited:
- EP-A- 1 281 604
- DE-A1- 2 018 358

## Description

### BACKGROUND OF THE INVENTION

### Field of the Invention

The present invention relates to a vehicle body structure equipped with a driver seat arranged in a vicinity of a laterally central position on a passenger compartment floor.

### Description of the Background Art

The preamble of claim 1 is disclosed in DE 2018358. Due to the recent demand for a reduction in fuel consumption, it is expected to provide more compact and more lightweight automobiles. In this type of automobile, it is required to use techniques for maximizing a space for passengers in a limited passenger compartment capacity. For example, there has been proposed a technique of arranging a driver seat in a vicinity of a laterally central position in a passenger compartment of an automobile, i.e., at a position spaced apart from each of laterally opposed sidewalls of an automobile body, to ensure a wide space on both lateral sides of a passenger (driver), as disclosed in DE 4323783 A1.

The vehicle body structure disclosed in the DE 4323783 A1 is designed such that a rear seat for a passenger other than the driver is arranged at a position rearwardly spaced apart from a rear end of the driver seat by a given distance, in the same manner as that in conventional automobiles. Thus, if it is attempted to widen a space for the passenger seated in the rear seat, there is no choice but to extend a distance between the rear seat and the driver seat. This causes a problem about an increase in a longitudinal length (overall length) of the automobile body.

### SUMMARY OF THE INVENTION

In view of the above circumstances, it is an object of the present invention to provide a vehicle body structure capable of effectively facilitating a reduction in size and weight of an automobile body while sufficiently ensuring a desired space for passengers.

In order to achieve the above object, the present invention provides a vehicle body structure, which is equipped with a driver seat arranged in a vicinity of a laterally central position on a passenger compartment floor, and at least a pair of rear seats. The vehicle body structure is characterized in that: the pair of rear seats are arranged in such a manner as to overlap a rear portion of the driver seat in side view and sandwich the driver seat from both lateral sides thereof in top plan view; the passenger compartment floor has a floor tunnel which is formed in a vicinity of a laterally central position of an upper surface thereof to protrude upwardly, and extend in a frontward/rearward direction of an automobile body in such a manner as to have a width dimension which gradually decreases toward a rear end of the automobile body; and the driver seat is mounted on a top wall of the floor tunnel.

### BRIEF DESCRIPTION OF THE DRAWINGS

FIG. 1 is a top plan view schematically showing an automobile having a vehicle body structure (passenger compartment) according to a first embodiment of the present invention.
FIG. 2 is a top plan view showing the passenger compartment according to the first embodiment.
FIG. 3 is a perspective view showing a part of the passenger compartment according to the first embodiment, in a vicinity of a side opening formed in a sidewall of an automobile body.
FIG. 4 is a sectional side view showing the vehicle body structure according to the first embodiment.
FIG. 5 is a perspective view showing the configuration of a passenger compartment floor of the vehicle body structure according to the first embodiment.
FIGS. 6A to 6D illustrate a detailed configuration of a floor tunnel of the passenger compartment floor in FIG. 5, wherein: FIG. 6A is a top plan view showing the passenger compartment floor; FIG. 6B is a sectional view taken along the line VIB-VIB in FIG. 6A; FIG. 6C is a sectional view taken along the line VIC-VIC in FIG. 6A; and FIG. 6D is a sectional view taken along the line VID-VID in FIG. 6A.
FIG. 7 is an explanatory diagram showing a state after passengers are seated, respectively, in a driver seat and a rear seat of the passenger compartment according to the first embodiment.
FIG. 8 is an explanatory diagram showing a relationship between an orientation and a seat width of the rear seat in FIG. 7.
FIG. 9 is an explanatory diagram showing a state after a passenger is seated in the rear seat in FIG. 7.
FIG. 10 is a top plan view showing a vehicle body structure (passenger compartment) according to a second embodiment of the present invention.
FIG. 11 is a perspective view showing a part of the passenger compartment according to the second embodiment, in a vicinity of a side opening formed in a sidewall of an automobile body.
FIGS. 12A to 12C are explanatory diagrams showing movements of a passenger who intends to sit on a driver seat of the vehicle body structure according to the second embodiment.

### DESCRIPTION OF THE PREFERRED EMBODIMENTS

### [FIRST EMBODIMENT]

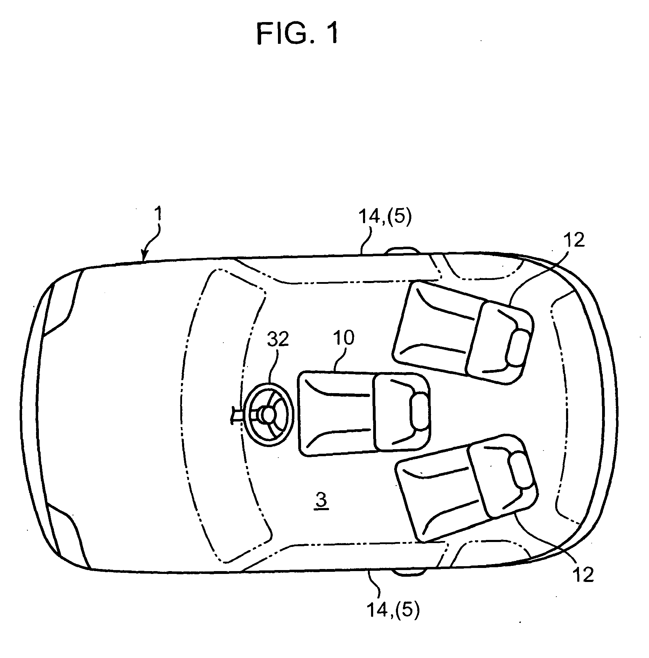

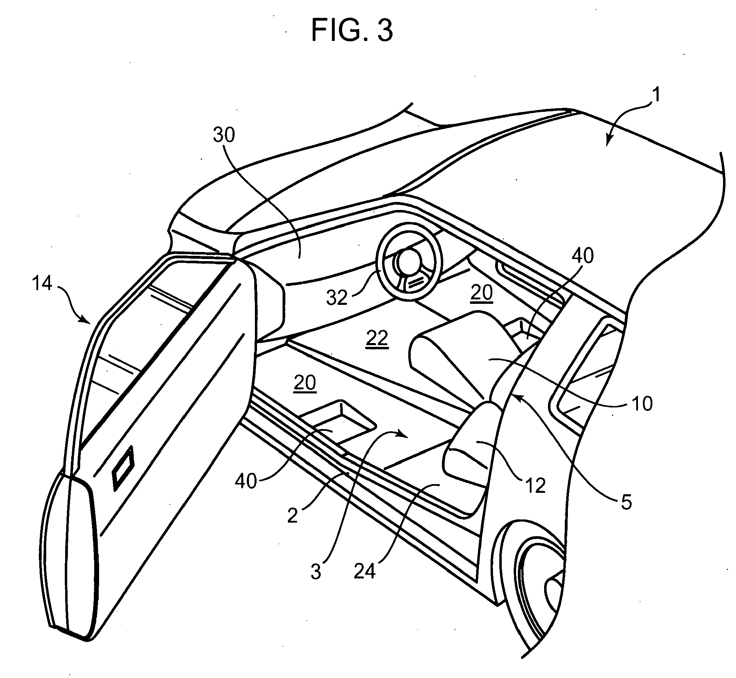

FIGS. 1 to 3 show a vehicle body structure of an automobile, according to a first embodiment of the present invention. This vehicle body structure comprises a passenger compartment floor 3 which is a bottom wall of an automobile body 1 defining an interior space of the passenger compartment (this interior space will hereinafter be referred to as "passenger compartment space"), a driver seat 10 arranged in a vicinity of a laterally central position on the passenger compartment floor 3, a pair of rear seats 12, 12 arranged behind the driver seat 10 and, respectively, on both lateral sides of the driver seat 10, a pair of side openings 5, 5 each formed in a corresponding one of laterally opposed sidewalls of the automobile body 1 to serve as an access opening (entrance) to the driver seat 10 and the rear seat 12, and a pair of hinged side doors 14, 14 each pivotally attached to a corresponding one of the sidewalls of the automobile body 1 at a front end thereof in such a manner as to selectively open and close a corresponding one of the side openings 5, 5. A steering wheel 32 is disposed in front of the driver seat 10. This steering wheel 32 is mounted to a rear end of a steering shaft which extends rearwardly through a laterally central portion of an instrument panel 30 partially defining a front end of the passenger compartment.

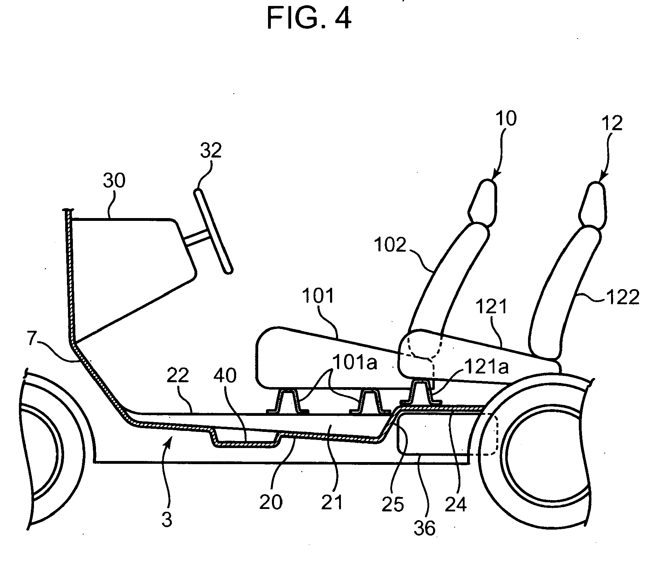

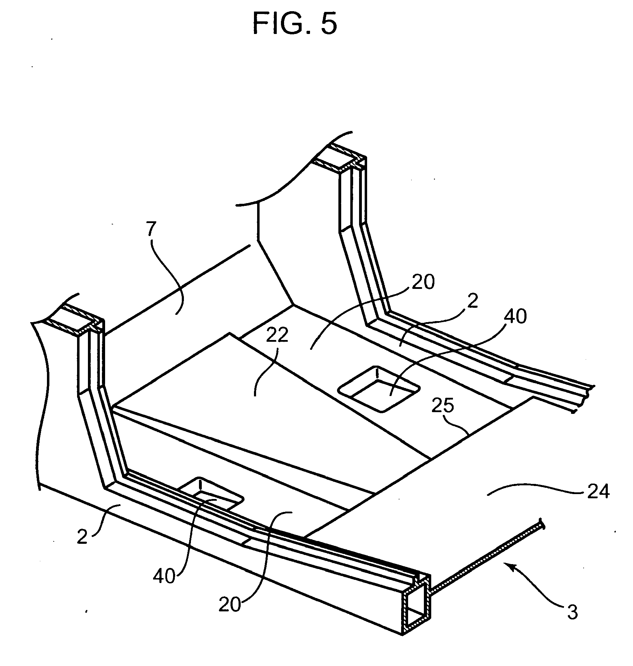

As shown in FIGS. 4 and 5, the passenger compartment floor 3 has a floor tunnel 22, a pair of right and left floor side portions 20, 20, and a floor rear portion 24. The floor tunnel 22 is formed in a vicinity of a laterally central position of an upper surface of the passenger compartment floor 3 to protrude upwardly and extend in a frontward/rearward or longitudinal direction of the automobile body 1. Each of the floor side portions 20, 20 is formed to extend between the floor tunnel 22 and a corresponding one of a pair of side sills 2, 2 disposed along respective laterally opposed lower side edges of the automobile body 1, and have an upper surface located at a height which is below an upper surface of a top wall of the floor tunnel 22. The floor rear portion 24 is formed to extend rearwardly from the floor tunnel 22 and the floor side portions 20, 20 and have an approximately flat surface.

The floor rear portion 24 is located at a position higher than that of a rear end of the floor side portion 20, and connected to the floor tunnel 22 and the floor side portion 20 through a step portion 25 extending upward from the rear edge of the floor side portion 20. A fuel tank 36 is disposed in a space defined below the floor rear portion 24.

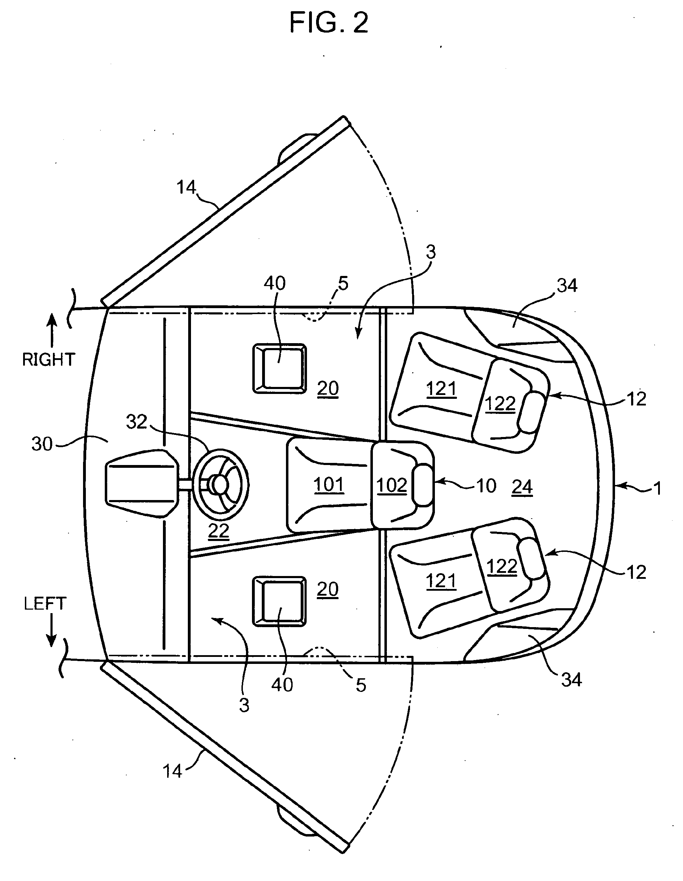

As shown in FIGS. 2 and 5, the floor tunnel 22 is formed to have a rearwardly-narrowed shape in top plan view, i.e., to have a width dimension which gradually decreases toward a rear end of the automobile body 1. Correspondingly, the floor side portion 20 is formed to have a rearwardly-widened shape, i.e., to have a width dimension which gradually increases toward the rear end of the automobile body 1.

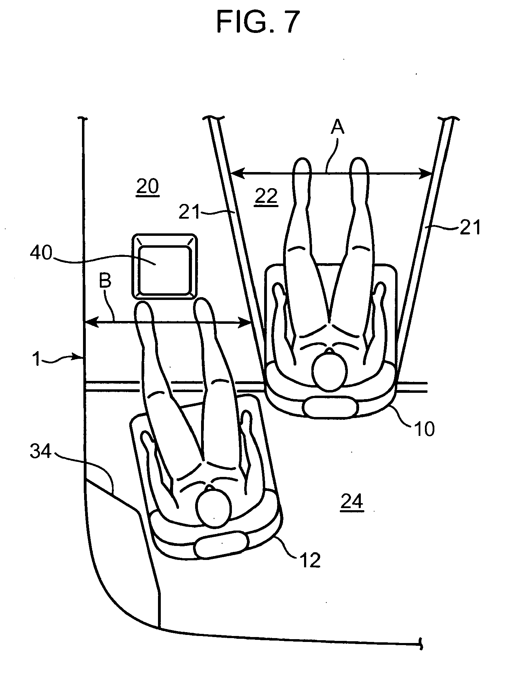

As shown in FIG. 7, a passenger seated in the driver seat 10 or the rear seat 12 can place their feet on the upper surface of the top wall of the floor tunnel 22 or the upper surface of the floor side portion 20. More specifically, the floor tunnel 22 is designed to allow a passenger seated in the driver seat 10 to place his/her feet on a front region of the upper surface of the top wall thereof, and the floor side portion 20 is designed to allow a passenger seated in the rear seat 12 to place his/her feet on a rear region of the upper surface thereof.

The upper surface of the floor side portion 20 is formed with a depression 40 as shown in FIGS. 2 to 5 and other figure. The depression 40 is formed at a position where a passenger who intends to step into the passenger compartment space via the side opening 5 formed in the side wall of the automobile body 1 can easily place his/her foot therein. That is, the depression 40 is designed to allow the passenger to firstly put his/her foot therein so as to serve as a means to lower a height of a platform region of the floor side portion 20 to be used when stepping into the passenger compartment space.

Further, as shown in FIG. 4, the floor side portion 20 is disposed to extend rearwardly from a lower edge of a dash panel 7 in such a manner as to be inclined downwardly in the rearward direction. In contrast, the top wall of the floor tunnel 22 is disposed to extend approximately horizontally in the longitudinal direction of the automobile body 1. Thus, each of laterally opposed side wall of the floor tunnel 22, i.e., each of a pair of step portions 21 of the floor tunnel 22 extending between the top wall thereof and the respective floor side portions 20, 20, has a height dimension which gradually decreases toward a front end of the automobile body 1 and gradually increases toward the rear end of the automobile body 1.

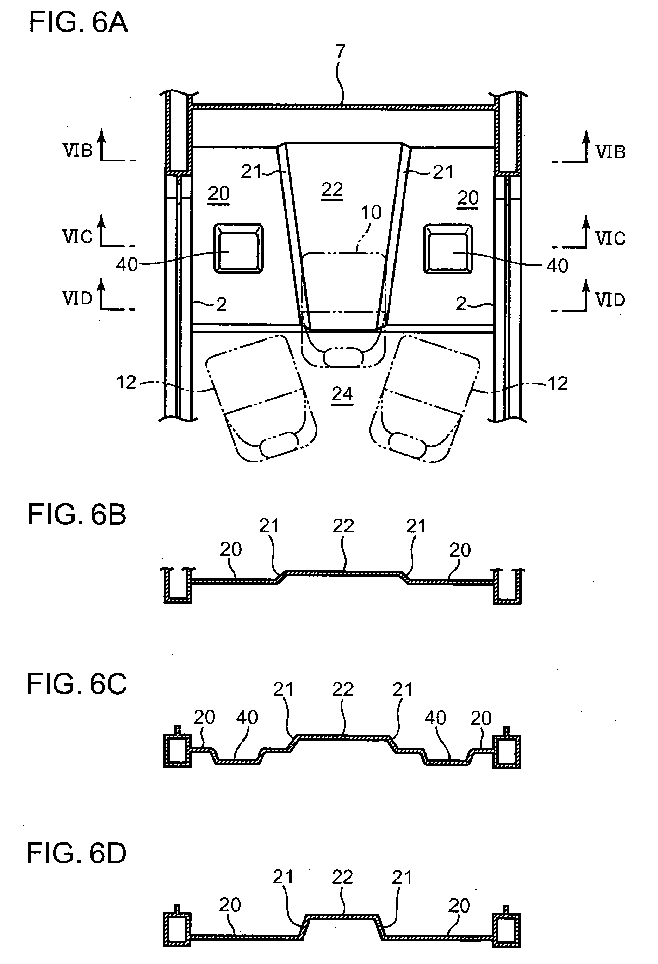

Specifically, as shown in FIGS. 6A to 6D, each of the step portions 21, 21 is formed to extend from one of laterally opposite side edges of the top wall of the floor tunnel 22 to an inner edge of a corresponding one of the floor side portions 20, 20 obliquely downwardly and laterally outwardly in vertical sectional view. Further, as is clear from the sectional views in FIGS. 6B to 6D, the step portion 21 is formed to have an inclination angle relative to a horizontal direction which gradually decreases toward the front end of the automobile body 1 and gradually increases toward the rear end of the automobile body 1, i.e., to have a slope which becomes gentler toward the front end of the automobile body 1 and becomes steeper toward the rear end of the automobile body 1.

As shown in FIGS. 2 and 4, the driver seat 10 comprises a seat cushion 101 and a seat back 102. The driver seat 10 is mounted on the top wall of the floor tunnel 22 through a bracket 101a fixed to a bottom surface of the seat cushion 101. Each of the pair of rear seats 12, 12 comprises a seat cushion 121 and a seat back 122. The rear seat 12 is mounted on the floor rear portion 24 through a bracket 121a fixed to a bottom surface of the seat cushion 121. The pair of rear seats 12, 12 are arranged in such a manner as to overlap a rear portion of the driver seat 10 in side view, as shown in FIG. 4, and sandwich the driver seat 10 from both lateral sides thereof in top plan view, as shown in FIG. 2. Further, as shown in FIG. 2, each of the pair of the rear seats 12, 12 is disposed to have a front surface oriented laterally obliquely and outwardly, i.e., the rear seats 12, 12 are arranged in a forwardly-oriented funnel-like pattern in top plan view. Furthermore, as shown in FIG. 2, each of the pair of the rear seats 12, 12 is disposed in such a manner as to avoid a protrusion 34 of a corresponding one of a pair of rear wheel houses each protruding toward the passenger compartment space from a rear end corner of the sidewall of the automobile body 1 formed to be gradually narrowed in the rearward direction.

As described above, in the first embodiment, the driver seat 10 is arranged in the vicinity of the laterally central position on the passenger compartment floor 3, and the driver seat 10 and the pair of rear seats 12, 12 to be disposed on a rear side of the driver seat 10 are arranged adjacent to each other in such a manner that a rear portion of the driver seat 10 overlaps each of the rear seats 12, 12 in side view. This makes it possible to reduce a longitudinal length of the passenger compartment space necessary for arranging the driver seat 10 and the rear seats 12, 12 and thereby facilitate a reduction in size and weight of the automobile body 1.

Further, the driver seat 10 is mounted on the top wall of the floor tunnel 22 formed to protrude from the upper surface of the passenger compartment floor 3, and the floor tunnel 22 is formed to have a planar shape with a width dimension which gradually decreases toward the rear end of the automobile body 1. This makes it possible to ensure a wide space for feet of a passenger seated in the driver seat 10 (hereinafter referred to occasionally as "driver seat occupant"), while effectively avoiding the occurrence of an undesirable situation where a space for feet of a passenger seated in the rear seat 12 (hereinafter referred to occasionally as "rear seat occupant") is largely narrowed by the floor tunnel 22. Specifically, the floor tunnel 22 is formed to be gradually narrowed in the rearward direction, i.e., in a rearwardly-narrowed shape, in top plan view, and correspondingly the floor side portion 20 is formed to be gradually widened in the rearward direction, i.e., in a rearwardly-widened shape, in top plan view. Thus, as shown in FIG. 7, both a width dimension A of a front region of the top wall of the floor tunnel 22 which determines a foot space for a driver seat occupant, and a width dimension B of a front region of the floor side portion 20 which determines a foot space for a rear seat occupant, can be largely ensured. This makes it possible to effectively achieve a reduction in size and weight of the automobile body 1, while sufficiently ensuring respective desired spaces for the feet of the passengers seated on the driver seat 10 and the rear seat 12.

Furthermore, the top wall of the floor tunnel 22 having the widened front region provides an additional advantage of enhancing flexibility in layout of an exhaust pipe or other component to be disposed below the floor tunnel 22.

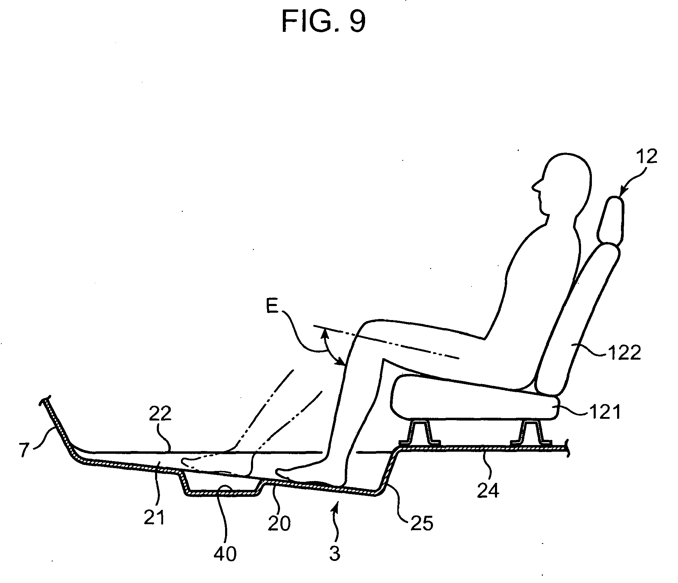

In the first embodiment, the floor side portion 20 is disposed to be inclined downwardly in the rearward direction so as to have a height which becomes lower toward the rear end of the automobile body 1. This makes it possible to lower a height of the rear region of the floor side portion 20 to be used for placing feet of a rear seat occupant thereon. Thus, as shown in FIG. 9, a bending angle E of a knee of a rear seat occupant can be relatively reduced to provide a more comfortable seating posture to the rear seat occupant. Further, the feet of the rear seat occupant are placed along the upper surface of the floor side portion 20 inclined downwardly in the rearward direction, in such a manner that toes of the foot are located at a higher position than a heel of the foot. This allows the rear seat occupant to have a more natural seating posture and effectively brace the feet. Thus, even under the condition that an inertia force due to deceleration during running of the automobile is applied to a body of the rear seat occupant in the frontward direction, the rear seat occupant can advantageously keep the seating posture stable.

The floor side portion 20 disposed to be inclined downwardly in the rearward direction as described above allows the step portion 21, i.e., the side wall, of the floor tunnel 22, to have a height dimension which gradually decreased toward the front end of the automobile body 1. Thus, a front region of the step portion 21 which requires a passenger to stride thereover during access to the driver seat 10 can have a height dimension less than that of a rear region of the step portion 21, to effectively provide enhanced step-in/out performance. In addition, the front region of the step portion 21 having a reduced height dimension can provide an advantage of being able to partly suppress oppressing feeling of a rear seat occupant which would otherwise be given from the step portion 21 in a state after the rear seat occupant stretches his/her feet (see the two-dot chain line in FIG. 9).

In the first embodiment, the depression 40 is formed in the upper surface of the floor side portion 20 to allow a passenger who intends to step into the passenger compartment space via the side opening formed in the sidewall of the automobile body 1, to put his/her foot therein. In this case, a height of a platform region of the floor side portion 20 to be used when the passenger steps into the passenger compartment space can be lowered to allow the passenger to further smoothly complete the step-in movement to the passenger compartment space. Specifically, a passenger who intends to step into the passenger compartment space is required to bend his/her body so as to prevent his/her head from being banged against a roof portion of the automobile body 1. During this step-in movement, if the above depression 40 exists to lower the height of the platform region, a level of the bending movement of passenger's body can be reduced to allow the passenger to more smoothly step into the passenger compartment space. This depression 40 also serves as an indicator which designates an adequate step-on position of the floor side portion 20 to allow a passenger to always place his/her foot on an adequate position when stepping into the passenger compartment space and move inside the passenger compartment space in a natural posture on the basis of the foot to sit on the driver seat 10 or the rear seat 12.

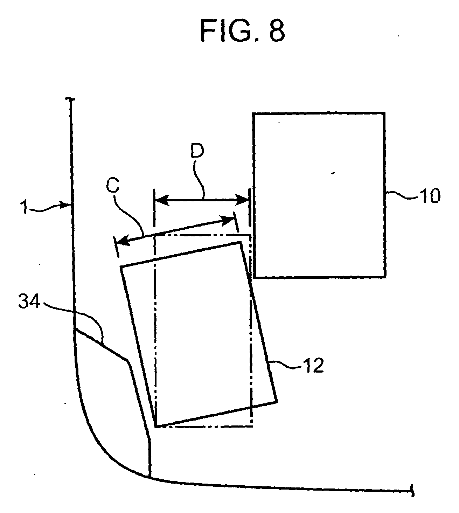

In the first embodiment, each of the pair of rear seats 12, 12 is disposed to have a front surface oriented laterally obliquely and outwardly. In this case, even under the condition that a space for arranging a rear portion of the rear seat 12 is restricted due to the presence of an obstacle, such as the protrusion 34 of the rear wheel house, at a rear end of the passenger compartment space, the rear seat 12 can be advantageously disposed in such a manner as to avoid the obstacle while ensuring a relatively wide seat width of the rear seat 12. Specifically, as indicated by the two-dot chain line in FIG. 8, if the rear seat 12 is disposed to have a front surface oriented directly in the frontward direction, only a relatively small width dimension D can be ensured as the seat width of the rear seat 12 to avoid the protrusion 34 of the rear wheel house (and a rear end portion of the driver seat 10 located on a frontward side of the rear seat 12). In contrast, as indicated by the solid line in FIG. 8, when the rear seat 12 is disposed to have a front surface oriented in a laterally outward and obliquely frontward direction, a larger width dimension C than the width dimension D can be ensured as the seat width.

Further, as shown in FIG. 7, the rear seat 12 oriented in the above direction allows a passenger seated in the rear seat 12 to position his/her feet in approximately parallel relation to the step portion 21 of the floor tunnel 22 formed to be gradually narrowed in the rearward direction in top plan view. This provides an advantage of being able to ensure a foot space for the rear seat occupant approximately evenly on both lateral sides of the feet.

In this embodiment, the step portion 21 is formed to extend, in vertical sectional view, obliquely downwardly and laterally outwardly with an inclination angle relative to a horizontal direction which gradually decreases toward the front end of the automobile body, i.e., with a slope which becomes gentler toward the front end of the automobile body. In this case, a front region of the step portion 21 which requires a passenger to stride thereover during access to the driver seat 10 can be formed as a gentle inclined surface (close to a horizontal surface) to effectively provide enhanced step-in/out performance during access to the driver seat 10. Further, a rear region of the step portion 21 formed to have a steep slope (close to a vertical slope) makes it possible to effectively avoid the occurrence of an undesirable situation where a width dimension (dimension B in FIG. 7) of the rear region of the floor side portion 20 to be used for placing feet of a rear seat occupant thereon is largely narrowed due to the slope of the step portion 21. Thus, a wide foot space for the rear seat occupant can be ensured.

As above, in order to lower a height of the rear region of the floor side portion 20 to be used for placing feet of a passenger seated in the rear seat 12, the floor side portion 20 in the first embodiment is disposed to be gradually inclined downwardly in the rearward direction. Alternatively, the floor side portion 20 may be formed in a stair-like shape to lower a height of the rear region of the floor side portion 20. As compared with this alternative, the floor side portion 20 in the first embodiment which has an upper surface formed as a smooth inclined surface is advantageous in maintaining a good appearance of the passenger compartment floor and allowing a rear seat occupant to sit on the rear seat 12 in a stable posture where toes of his/her foot are located at a higher position than a heel of the foot.

Further, reversely to the first embodiment, the step portion 21, i.e., the side wall, of the floor tunnel 22, may be formed to have a slope which becomes steeper toward the frontward direction of the automobile body 1 and becomes gentler toward the rearward direction of the automobile body 1. In this case, a width of the front region of the top wall of the floor tunnel 22 to be user for placing feet of a driver seat occupant (i.e., a foot space for the driver seat occupant) can be advantageously increased. Further, the rear region of the step portion 21 which is a factor causing a restriction of a foot space for a rear seat occupant can be formed as a gentle inclined surface to effectively reduce oppressing feeling of the rear seat occupant which would otherwise be given from the step portion 21.

### [SECOND EMBODIMENT]

In the vehicle body structure according to the first embodiment, which is equipped with the driver seat 10 arranged in the vicinity of the laterally central position on the passenger compartment floor 3, the depression 40 is formed in the floor side portion 20 to allow a passenger who intends to step into the passenger compartment space to firstly put his/her foot therein so as to lower a height of the platform region of the floor side portion 20 to be used during stepping into the passenger compartment space, to assist a smooth step-in movement of the passenger. Other need for assisting a passenger's step-in movement is contemplated. For example, in the above type of vehicle body structure equipped with the driver seat 10 arranged in the vicinity of the laterally central position, a passenger is required to walk several steps so as to sit on the driver seat 10 through the floor side portion 20. Thus, depending on a foot (right foot or left foot) with which the passenger firstly steps into the passenger compartment space, the feet of the passenger are likely to conflict with each other during a movement for sitting on the driver seat 10 (a seating movement to the driver seat 10). There is the need for effectively avoiding the occurrence of such a situation. The following description will be made about a vehicle body structure according to a second embodiment of the present invention, which includes an improvement in the above respect.

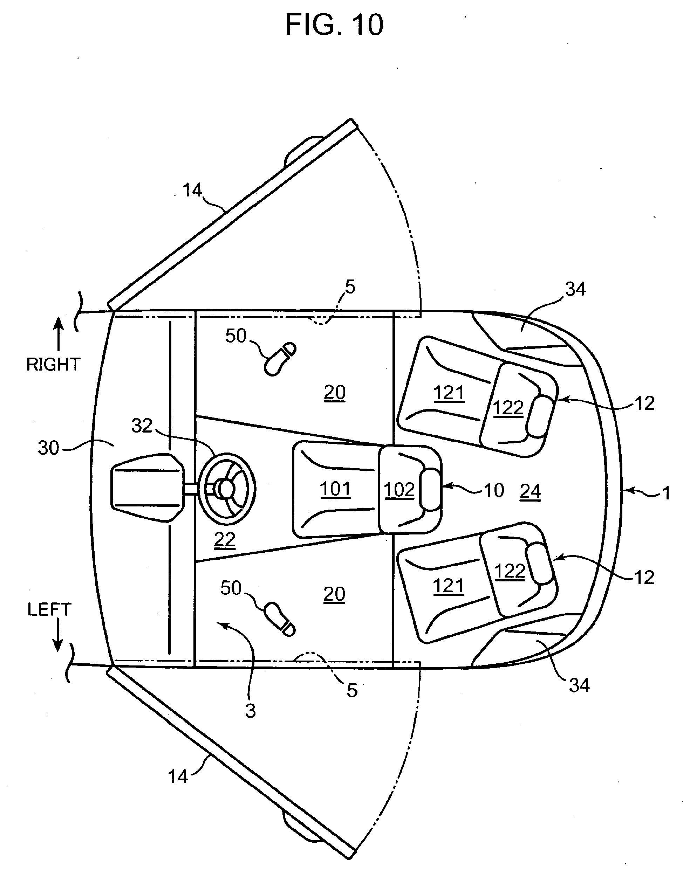

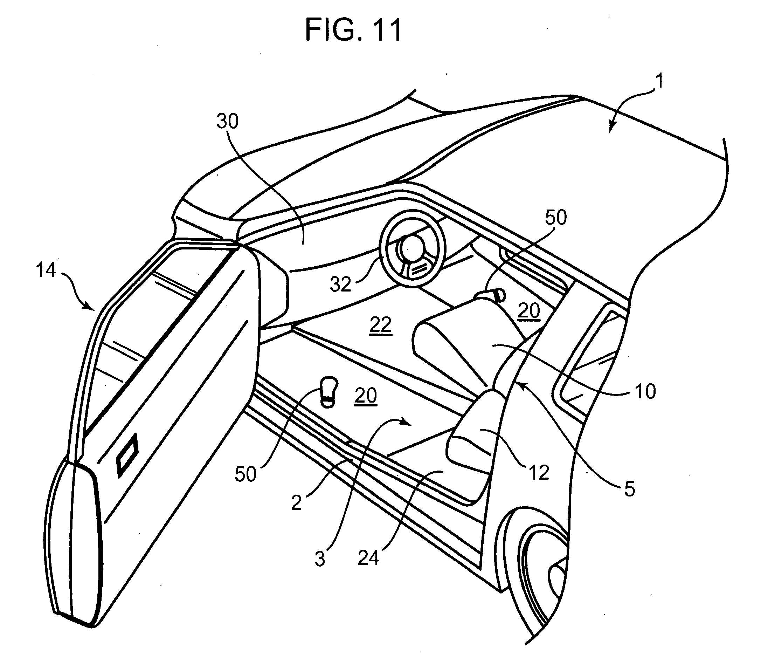

FIGS. 10 and 11 show the vehicle body structure according to the second embodiment of the present invention. In FIGS. 10 and 11, the same element or component as that in the first embodiment is defined by the same reference numeral or code, and its detailed description will be omitted. In the vehicle body structure according to the second embodiment illustrated in these figures, a footmark indicator 50 is provided on the upper surface of the floor side portion 20 to serve as an indicator which designates a foot (right foot or left foot) with which a passenger who intends to sit on the driver seat 10, should step on the floor side portion 20.

On the floor side portion 20 located on a left side of the automobile body 1, the footmark indicator 50 is painted to depict a left footmark shape. Further, on the floor side portion 20 located on a right side of the automobile body 1, the footmark indicator 50 is painted to depict a right-foot shape. The footmark indicator 50 is provided at a position where a passenger who intends to sit on the driver seat 10 can place his/her foot therein, to designate a foot (right foot or left foot) with which the passenger should step on the floor side portion 20, as well as a step-on position and a step-on angle of the designated foot. A method of indicating the footmark indicator 50 on the floor side portion 20 is not limited to painting or coating as described above. For example, the footmark indicator 50 may be indicated by attaching a sticker having a footmark shape onto the floor side portion 20 or by forming a depression having a footmark shape in the upper surface of the floor side portion 20.

The footmark indicator 50 may be provided directly on the upper surface of the floor side portion 20. However, when a floor mat is put on the floor side portion 20 as a part of the floor side portion 20, the footmark indicator 50 is preferably provided on an upper surface of the floor mat. In this case, for example, if a user of the automobile decides it's better to remove the footmark indicator 50, the footmark indicator 50 can be readily removed only by replacing the floor mat with another one having no footmark indicator. This has another advantage of being able to readily change the content of the indicator 50 from the footmark to a desired content, for example, depending on a model type of automobile or a place of destination of automobile.

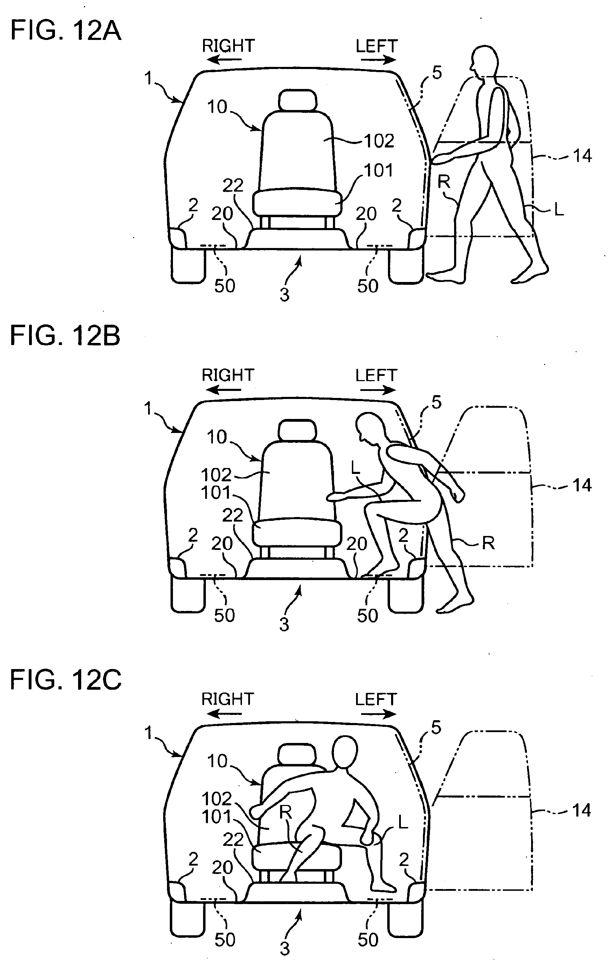

The above footmark indicator 50 also allows the passenger to smoothly complete a seating movement to the driver seat 10. The following description will be made about the seating movement of the passenger, with reference to FIGS. 12A to 12C. Specifically, FIGS. 12A to 12C illustrate one example where a passenger intends to sit on the driver seat 10 from the left side of the automobile body 1.

As shown in FIG. 12A, a passenger who intends to sit on the driver seat 10 firstly opens the left side door 14. Then, the passenger gets close the side opening 5 formed in the left sidewall of the automobile body 1, in an obliquely frontward direction of the automobile body 1, through a space between a rear end of the opened hinged side door 14 and the automobile body 1.

Then, as shown in FIG. 12B, the passenger puts his/her foot on the left floor side portion 20 while striding over the side sill 2 in the obliquely frontward direction through the side opening 5, and moves his/her upper body into the passenger compartment space while bending the body to prevent the head from being banged against the roof portion of the automobile body 1. More specifically, after visually checking the left-footmark indicator 50 provided on the left floor side portion 20, the passenger places his/her left foot L on the left-footmark indicator 50 in a conforming manner to step into the passenger compartment space firstly with the left foot L.

In view of allowing the passenger to smoothly move into the passenger compartment space, the position and angle of the footmark indicator 50 on which the passenger should place the foot are preferably set in a manner as shown in FIG. 10. Specifically, in the embodiment illustrated in FIG. 10, the footmark indicator 50 is oriented in a laterally inward and obliquely frontward direction. Thus, the passenger who moves into the passenger compartment space in the obliquely frontward direction of the automobile body 1 can step on the floor side portion 20 in conformity to the direction of the footmark indicator 50 without taking an uncomfortable posture. In addition, the footmark indicator 50 is set at a longitudinal position aligned with a front end of the seat cushion 101 of the driver seat 10. Thus, the passenger can readily make a transition to an after-mentioned seating movement to the driver seat 10.

Then, on the basis of the left foot L placed on the floor side portion 20, the passenger moves his/her opposite right foot R to the front of the seat cushion 101 of the driver seat 10. Then, as shown in FIG. 12C, the passenger sits on the seat cushion 101 using the right foot R as a pivoting foot, and moves the left foot L toward the right foot R so as to complete a seating movement to the driver seat 10.

According to the above series of movements, the passenger can smoothly sit on the driver seat 10 in a natural posture. Specifically, the passenger who steps on the floor side portion 20 located on the left side of the automobile body 1, in conformity to the left footmark indicator 50 provided on this floor side portion 20, can complete a movement for placing, in front of the seat, the right foot to be used as a pivoting foot when sitting on the seat cushion 101 (i.e., a foot to be positioned on an inner side of the seat cushion when viewed from the passenger who intends to sit on the seat), in a natural posture on the basis of the left foot L. This makes it possible to smoothly complete the seating movement to the driver seat 10. In the wrong way, if the passenger firstly places the right foot R on the left floor side portion 20, the right foot R cannot be moved to the above foot position for the seating movement, in succession to the step-in movement, to cause confliction between the feet. Under the condition that the passenger has to move into the passenger compartment space while bending his/her body as shown in FIG. 12B, the above situation will lead to a significantly unstable posture. In contrast, the above indicator designating the left foot L as a foot to be firstly placed on the left floor side portion 20 makes it possible to complete, in a natural posture, the seating movement to the driver seat 10 which has to be performed under the condition that the passenger bends his/her body.

One example where a passenger intends to sit on the driver seat 10 from the left side of the automobile body 1 has been described with FIGS. 12A to 12C. On the other hand, when a passenger intends to sit on the driver seat 10 from a right side of the automobile body 1, the indicator may be designed to designate the right foot R as a foot to be firstly placed on the right floor side portion 20 so as to achieve a smooth seating movement in the same manner as described above.

As above, in the second embodiment, the footmark indicator 50 is provided as an indicator for designating a foot (left foot or right foot) with which a passenger (driver) who intends to sit on the driver seat 10 arranged in the vicinity of the laterally central position of the passenger compartment space, should step on the floor side portion 20 located on the right or left side of the driver seat 10. Thus, the passenger can place an adequate foot on the floor side portion 20 and move to the driver seat 10 in a natural posture on the basis of the foot. This makes it possible to effectively avoid the occurrence of the undesirable situation where the feet of the passenger conflict with each other during the seating movement to the driver seat 10, to allow the passenger to further smoothly complete the seating movement.

Specifically, in the second embodiment, the right and left footmark indicators 50, 50 are provided on the respective right and left floor side portions 20, 20, to designate the left foot L and the right foot R, respectively, as a foot to be firstly placed on the left floor side portion 20, and as a foot to be firstly placed on the right floor side portion 20. Thus, as described in connection with FIGS. 12A to 12B, the seating movement of the passenger who intends to sit on the driver seat 10 from the right or left side of the automobile body 1 can be smoothly completed.

Further, a foot of the passenger is placed on the indicator 50 having a footmark shape. This makes it possible to clearly designate not only a foot (right foot or left foot) of the passenger to be placed on the floor side portion 20 but also a step-on position and a step-on angle of the foot, so as to further smoothly complete the seating movement to the driver seat 10.

While an indicator for designating a foot to be placed on the foot side portion 20 in the second embodiment consists of the footmark indicator 50, the indicator in the present invention is not limited to the footmark indicator 50, but may be any other suitable indicator capable of performing the same designation. For example, an indicator consisting of a character or text, such as "Right" or "Left", may be used.

As described based on the above embodiments, the present invention provides a vehicle body structure of an automobile, which is equipped with a driver seat arranged in a vicinity of a laterally central position on a passenger compartment floor, and at least a pair of rear seats. The vehicle body structure is characterized in that: the pair of rear seats are arranged in such a manner as to overlap a rear portion of the driver seat in side view and sandwich the driver seat from both lateral sides thereof in top plan view; the passenger compartment floor has a floor tunnel which is formed in a vicinity of a laterally central position of an upper surface thereof to protrude upwardly, and extend in a frontward/rearward direction of an automobile body in such a manner as to have a width dimension which gradually decreases toward a rear end of the automobile body; and the driver seat is mounted on a top wall of the floor tunnel.

In the vehicle body structure of the present invention, the driver seat arranged in the vicinity of the laterally central position on the passenger compartment floor, and the pair of rear seats are arranged in such a manner as to overlap a rear portion of the driver seat in side view and sandwich the driver seat from both lateral sides thereof in top plan view. This makes it possible to reduce a longitudinal length of the passenger compartment space necessary for arranging the driver seat and the rear seats and thereby facilitate a reduction in size and weight of the automobile body. Further, the driver seat is mounted on a top wall of the floor tunnel protrudingly formed in the upper surface of the passenger compartment floor, and the floor tunnel is formed to have a planar shape with a width dimension which gradually decreases toward the rear end of the automobile body. This makes it possible to relatively increase a width dimension in a front region of the top wall of the floor tunnel so as to ensure a wide foot space for a driver seat occupant, above the front region of the top wall of the floor tunnel, while effectively avoiding the occurrence of an undesirable situation where a foot space for a rear seat occupant to be defined on an outward side of a rear region of the floor tunnel is largely narrowed by the floor tunnel. Thus, the reduction in size and weight of the automobile body can be effectively achieved while sufficiently ensuring both the foot spaces for the driver seat occupant and the rear seat occupant.

Preferably, the passenger compartment floor has a pair of floor side portions each formed to extend between the floor tunnel and a corresponding one of a pair of side sills disposed along respective laterally opposed lower side edges of the automobile body. Further, each of the floor side portions may have an upper surface with a front region and a rear region, and the rear region may be adapted to allow a passenger seated in a corresponding one of the rear seats to place his/her foot thereon, and formed to be located at a height which is below the front region.

In this vehicle body structure where the rear region of the floor side portion adapted to allow a rear seat occupant to place his/her foot thereon is formed to be located at a height which is below the front region of the floor side portion, a bending angle of a knee of the rear seat occupant can be advantageously reduced to provide a more comfortable seating posture to the rear seat occupant.

Preferably, the floor side portion is disposed such that the upper surface thereof is inclined downwardly in the rearward direction to have a height which becomes lower toward the rear end of the automobile body.

Differently from a structure where the floor side portion is formed, for example, in a stair-like shape to change a height of the upper surface of the floor side portion, the floor side portion in this vehicle body structure can have an upper surface formed as a smooth surface to advantageously maintain a good appearance of the passenger compartment floor. Further, feet of a rear seat occupant are placed along the upper surface of the floor side portion inclined downwardly in the rearward direction, in such a manner that toes of the foot are located at a higher position than a heel of the foot. This allows the rear seat occupant to have a more natural seating posture and effectively brace the feet. Thus, even under the condition that an inertia force due to deceleration G during running of the automobile is applied to a body of the rear seat occupant in the frontward direction, the rear seat occupant can advantageously keep the seating posture stable.

Preferably, the upper surface of the floor side portion has a depression adapted to allow a passenger who intends to step into a passenger compartment space via a corresponding one of a pair of access openings formed in respective laterally opposed sidewalls of the automobile body, to put his/her foot therein.

In this vehicle body structure where a passenger who intends to step into the passenger compartment space via the access opening formed in the sidewall of the automobile body is allowed to put his/her foot in the depression formed in the upper surface of the floor side portion, a height of a platform region of the floor side portion to be used when a passenger steps into the passenger compartment space can be lowered to allow the passenger to further smoothly complete a step-in movement to the passenger compartment space.

Preferably, each of the pair of rear seats is disposed to have a front surface oriented laterally obliquely and outwardly.

Differently from an arrangement where the rear seat is disposed to have a front surface oriented directly in the frontward direction, even under the condition that a space for arranging a rear portion of the rear seat is restricted due to the presence of an obstacle, such as a protrusion of a rear wheel house protrudingly formed at a rear end of the sidewall of the automobile body, the rear seat in the above vehicle body structure can be advantageously disposed in such a manner as to avoid the obstacle while ensuring a relatively wide seat width of the rear seat.

Preferably, the floor tunnel has a pair of step portions extending between the top wall thereof and the respective floor side portions. Each of the step portions may be formed to extend, in vertical sectional view, obliquely downwardly and laterally outwardly with an inclination angle relative to a horizontal direction which gradually decreases toward a front end of the automobile body.

In this vehicle body structure, a front region of the step portion formed between the floor side portion and the top wall of the floor tunnel, i.e., a region of the step portion which requires a passenger to stride thereover during access to the driver seat can be formed as a gentle inclined surface (close to a horizontal surface) to effectively provide enhanced step-in/out performance during access to the driver seat. Further, a rear region of the step portion formed to have a steep slope (close to a vertical slope) makes it possible to effectively avoid the occurrence of an undesirable situation where a width dimension of the rear region of the floor side portion to be used for placing feet of a rear seat occupant thereon is largely narrowed due to the slope of the step portion. Thus, a wide foot space for the rear seat occupant can be ensured.

Preferably, in the above vehicle body structure, the automobile body has laterally opposite sidewalls each formed with a side opening serving as an access opening to the driver seat, and includes a pair of side doors each adapted to selectively open and close a corresponding one of the side openings, and the upper surface of the floor side portion has a platform region which is adapted to serve as a platform for a passenger who intends to sit on the driver seat via a corresponding one of the side openings. The platform region may have an indicator which designates a foot with which the passenger should step on the floor side portion.

In this vehicle body structure where the indicator is provided as a means to designate a foot (left foot or right foot) with which a passenger (driver) who intends to sit on the driver seat arranged in the vicinity of the laterally central position of the passenger compartment space, should step on the floor side portion located between the driver seat and the side opening, the passenger can place an adequate foot on the floor side portion and move to the driver seat in a natural posture on the basis of the foot. This makes it possible to effectively avoid the occurrence of the undesirable situation where the feet of the passenger conflict with each other during a seating movement to the driver seat, to allow the passenger to further smoothly complete the seating movement.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined by the claims, they should be construed as being included therein.

## Claims

1. A vehicle body structure, which is equipped with a driver seat (10) arranged in a vicinity of a laterally central position on a passenger compartment floor (3), and at least a pair of rear seats (12, 12), whereby
said pair of rear seats (12, 12) are arranged in such a manner as to overlap a rear portion of said driver seat (10) in side view and sandwich said driver seat (10) from both lateral sides thereof in top plan view;
said vehicle body structure being **characterized in that**:
said passenger compartment floor (3) has a floor tunnel (22) which is formed in a vicinity of a laterally central position of an upper surface thereof to protrude upwardly, and extend in a frontward/rearward direction of an automobile body (1) in such a manner as to have a width dimension which gradually decreases toward a rear end of the automobile body (1); and
said driver seat (10) is mounted on a top wall of said floor tunnel (22).

2. The vehicle body structure according to claim 1, **characterized in that** said passenger compartment floor (3) has a pair of floor side portions (20, 20) each formed to extend between said floor tunnel (22) and a corresponding one of a pair of side sills (2, 2) disposed along respective laterally opposed lower side edges of the automobile body (1), each of said floor side portions (20, 20) having an upper surface with a front region and a rear region, wherein said rear region is adapted to allow a passenger seated in a corresponding one of said rear seats (12, 12) to place his/her foot thereon, and formed to be located at a height which is below said front region.

3. The vehicle body structure according to claim 2, **characterized in that** said floor side portion (20) is disposed such that the upper surface thereof is inclined downwardly in the rearward direction to have a height which becomes lower toward the rear end of the automobile body (1).

4. The vehicle body structure according to claim 3, **characterized in that** said upper surface of said floor side portion (20) has a depression (40) adapted to allow a passenger who intends to step into a passenger compartment space via a corresponding one of a pair of access openings (5, 5) formed in respective laterally opposed sidewalls of the automobile body (1), to put his/her foot therein.

5. The vehicle body structure according to any one of claims 1 to 3, **characterized in that** each of said pair of rear seats (12, 12) is disposed to have a front surface oriented laterally obliquely and outwardly.

6. The vehicle body structure according to claim 2 or 3, **characterized in that** said floor tunnel (22) has a pair of step portions (21, 21) extending between said top wall thereof and said respective floor side portions (20, 20), each of said step portions (21, 21) being formed to extend, in vertical sectional view, obliquely downwardly and laterally outwardly with an inclination angle relative to a horizontal direction which gradually decreases toward a front end of the automobile body (1).

7. The vehicle body structure according to claim 2 or 3, **characterized in that:**
said automobile body (1) has laterally opposite sidewalls each formed with a side opening (5) serving as an access opening to said driver seat (10), and includes a pair of side doors (14, 14) each adapted to selectively open and close a corresponding one of said side openings (5, 5); and
the upper surface of said floor side portion (20) has a platform region which is adapted to serve as a platform for a passenger who intends to sit on said driver seat (10) via a corresponding one of said side openings (5, 5), said platform region having an indicator (50) which designates a foot with which the passenger should step on said floor side portion (20).

## Patentansprüche

1. Fahrzeugkarosseriekonstruktion, die mit einem Fahrersitz (10), der nahe einer seitlich mittigen Position auf einem Fahrgastraumboden (3) angeordnet ist, und mindestens einem Paar von Rücksitzen (12, 12) ausgestattet ist,
wobei das Paar Rücksitze (12, 12) auf solche Weise angeordnet ist, dass es in Seitenansicht einen hinteren Abschnitt des Fahrersitzes (10) überlagert und den Fahrersitz (10) in Draufsicht von beiden seitlichen Seiten desselben sandwichartig umschließt;
wobei die Fahrzeugkarosseriekonstruktion **dadurch gekennzeichnet ist, dass**
der Fahrgastraumboden (3) eine Bodendurchführung (22) aufweist, die nahe einer seitlich mittigen Position einer oberen Fläche desselben so ausgebildet ist, dass sie nach oben hervorsteht und sich in eine nach vorne/hinten gerichtete Richtung einer Kraftfahrzeugkarosserie (1) auf solche Weise erstreckt, dass sie eine Breitenabmessung aufweist, die in Richtung eines hinteren Endes der Kraftfahrzeugkarosserie (1) allmählich abnimmt; und
der Fahrersitz (10) an einer oberen Wand der Bodendurchführung (22) angebracht ist.

2. Fahrzeugkarosseriekonstruktion nach Anspruch 1, **dadurch gekennzeichnet, dass** der Fahrgastraumboden (3) ein Paar jeweils so ausgebildete Bodenseitenabschnitte (20, 20) aufweist, dass sie sich zwischen der Bodendurchführung (22) und einer entsprechenden eines Paars von Seitentürschwellen (2,2) erstrecken, die entlang jeweiliger seitlich gegenüberliegender unterer Seitenkanten der Kraftfahrzeugkarosserie (1) angeordnet sind, wobei jeder der Bodenseitenabschnitte (20, 20) eine obere Fläche mit einem vorderen Bereich und einem hinteren Bereich aufweist, wobei der hintere Bereich dafür ausgelegt ist, es in einem entsprechenden der Rücksitze (12, 12) sitzenden Fahrgast zu ermöglichen, seinen/ihren Fuß darauf zu setzen, und so ausgebildet ist, dass er sich auf einer Höhe befindet, die unter dem vorderen Bereich liegt.

3. Fahrzeugkarosseriekonstruktion nach Anspruch 2, **dadurch gekennzeichnet, dass** der Bodenseitenabschnitt (20) so angeordnet ist, dass die obere Fläche desselben nach hinten nach unten geneigt ist, um ein Gewicht aufzuweisen, das in Richtung des hinteren Endes der Kraftfahrzeugkarosserie (1) niedriger wird.

4. Fahrzeugkarosseriekonstruktion nach Anspruch 3, **dadurch gekennzeichnet, dass** die obere Fläche des Bodenseitenabschnitts (20) eine dafür ausgelegte Vertiefung (40) aufweist, einem Fahrgast, der beabsichtigt, in einen Fahrgastraum über eine entsprechende eines Paar von Zugangsöffnungen (5, 5) einzusteigen, die in entsprechenden seitlich gegenüberliegenden Seitenwänden der Kraftfahrzeugkarosserie (1) ausgebildet sind, seinen/ihren Fuß in diese zu stellen.

5. Fahrzeugkarosseriekonstruktion nach einem der Ansprüche 1 bis 3, **dadurch gekennzeichnet, dass** jeder des Paars von Rücksitzen (12, 12) so angeordnet ist, dass er eine vordere Oberfläche aufweist, die seitlich schräg und nach außen ausgerichtet ist.

6. Fahrzeugkarosseriekonstruktion nach Anspruch 2 oder 3, **dadurch gekennzeichnet, dass** die Bodendurchführung (22) ein Paar Stufenabschnitte (21, 21) aufweist, die sich zwischen der oberen Wand derselben und den jeweiligen Bodenseitenabschnitten (20, 20) erstrecken, wobei jeder der Stufenabschnitte (21, 21) so ausgebildet ist, dass er sich in vertikaler Schnittansicht schräg nach unten und seitlich nach außen bei einem Neigungswinkel bezüglich einer horizontalen Richtung erstreckt, der in Richtung eines vorderen Endes der Kraftfahrzeugkarosserie (1) allmählich abnimmt.

7. Fahrzeugkarosseriekonstruktion nach Anspruch 2 oder 3, **dadurch gekennzeichnet, dass:**
die Fahrzeugkarosserie (1) seitlich gegenüberliegende Seitenwände aufweist, die jeweils mit einer Seitenöffnung (5) ausgebildet sind, die als Zugangsöffnung zu dem Fahrersitz (10) dient, und ein Paar Seitentüren (14, 14) umfasst, die jeweils zum selektiven Öffnen und Schließen einer entsprechenden der Seitenöffnungen (5, 5) ausgelegt sind; und
die obere Fläche des Bodenseitenabschnitts (20) einen so ausgelegten Plattformbereich aufweist, dass er als eine Plattform für einen Fahrgast dient, der beabsichtigt, sich mittels einer entsprechenden der Seitenöffnungen (5, 5) auf den Fahrersitz (10) zu setzen, wobei der Plattformbereich eine Kennzeichnung (50) aufweist, die einen Fuß anzeigt, mit dem der Fahrgast auf den Bodenseitenabschnitt (20) steigen soll.

## Revendications

1. Structure de carrosserie de véhicule, qui est équipée d'un siège du conducteur (10) disposé à proximité d'une position centrale dans le sens latéral sur un plancher d'habitacle (3), et d'au moins une paire de sièges arrière (12, 12), dans laquelle
ladite paire de sièges arrière (12, 12) est disposée de manière à chevaucher une partie arrière dudit siège du conducteur (10) en vue de profil et à prendre en sandwich ledit siège du conducteur (10) par les deux côtés latéraux de celui-ci en vue de dessus ;
ladite structure de carrosserie de véhicule étant **caractérisée en ce que**
ledit plancher d'habitacle (3) présente un tunnel de plancher (22) qui est formé à proximité d'une position centrale dans le sens latéral de sa face supérieure pour faire saillie vers le haut et s'étendre vers l'avant et l'arrière d'une carrosserie d'automobile (1) de façon à avoir une dimension en largeur qui diminue progressivement en direction d'une extrémité arrière de la carrosserie d'automobile (1) ; et
ledit siège du conducteur (10) est monté sur une paroi supérieure dudit tunnel de plancher (22).

2. Structure de carrosserie de véhicule selon la revendication 1, **caractérisée en ce que** ledit plancher d'habitacle (3) présente une paire de parties latérales de plancher (20, 20) dont chacune est formée de façon à s'étendre entre ledit tunnel de plancher (22) et le longeron de caisse correspondant d'une paire de longerons de caisse (2, 2) disposés le long de bords latéraux inférieurs de la carrosserie d'automobile (1) opposés dans le sens latéral, chacune des parties latérales de plancher (20, 20) ayant une surface supérieure avec une partie avant et une partie arrière, ladite partie arrière étant adaptée pour permettre à un passager assis dans un desdits sièges arrière (12, 12) de placer son pied dessus et conformée pour se trouver à une hauteur située en dessous de ladite partie avant.

3. Structure de carrosserie de véhicule selon la revendication 2, **caractérisée en ce que** ladite partie latérale de plancher (20) est disposée de telle façon que sa surface supérieure est inclinée vers le bas en direction de l'arrière, de manière à avoir une hauteur décroissante en direction de l'extrémité arrière de la carrosserie d'automobile (1).

4. Structure de carrosserie de véhicule selon la revendication 2, **caractérisée en ce que** ladite surface supérieure de ladite partie latérale de plancher (20) présente un creux (40) adapté de telle façon qu'un passager ayant l'intention de monter dans un espace d'habitacle en passant par l'une des ouvertures d'une paire d'ouvertures d'accès (5, 5) formées dans les panneaux opposés dans le sens latéral de la carrosserie d'automobile puisse mettre son pied dedans.

5. Structure de carrosserie de véhicule selon l'une des revendications 1 à 3, **caractérisée en ce que** chaque siège de ladite paire de sièges arrière (12, 12) est disposé de telle façon que sa face avant soit orientée latéralement en oblique et vers l'extérieur.

6. Structure de carrosserie de véhicule selon la revendication 2 ou 3, **caractérisée en ce que** ledit tunnel de plancher (22) présente une paire de zones en gradin (21, 21) s'étendant entre sa paroi supérieure et lesdites parties latérales de plancher (20, 20), chacune des zones en gradin (21, 21) étant conformée pour s'étendre, vue en coupe verticale, en oblique vers le bas et latéralement vers l'extérieur selon un angle d'inclinaison par rapport à l'horizontale qui diminue progressivement en direction d'une extrémité arrière de la carrosserie d'automobile (1).

7. Structure de carrosserie de véhicule selon la revendication 2 ou 3, **caractérisée en ce que:**
ladite carrosserie d'automobile (1) présente des panneaux latéraux opposés dans le sens latéral, dont chacun est doté d'une ouverture latérale (5) servant d'ouverture d'accès audit siège du conducteur (10), et comprend une paire de portes latérales (14, 14) dont chacune est adaptée pour ouvrir et fermer sélectivement l'ouverture latérale (5, 5) correspondante ; et
la surface supérieure de ladite partie latérale de plancher (20) présente une partie de plateforme qui est adaptée pour servir de plateforme à un passager ayant l'intention de s'asseoir sur le siège du conducteur (10) en passant par l'une desdites ouvertures latérales (5, 5), ladite partie de plateforme présentant un indicateur (50) qui désigne le pied avec lequel le passager doit marcher sur ladite partie latérale de plancher (20).
